# EUROPEAN PATENT APPLICATION

(11) **EP 1 712 979 A1**
(43) Date of publication of application: **18.10.2006**
(21) Application number: 05102828.0
(22) Date of filing: 11.04.2005
(51) Int. Cl.: G06F 1/08, G06F 1/32

(54) **IC architecture**

(71) Applicant: Koninklijke Philips Electronics N.V., 5621 BA Eindhoven (NL)
(72) Inventor: Van Ingen, Michiel c/o Philips I.P. & Standards, 5600 AE Eindhoven (NL)
(74) Representative: Steenbeek, Leonardus Johannes

(57) **Abstract**

An integrated circuit, comprising a clock generator (CLCKGEN), and a device (1, P0) coupled to receive a clock signal from the clock generator, wherein the device is coupled to provide a control signal to the clock generator to inform the clock generator as to a clock speed desired by the device. For example, a first clock speed desired by the device when the device wishes to exchange data exceeds a second clock speed by the device when the device does not wish to exchange data. Alternatively, the clock speed desired by the device depends on timing requirements to be met by the device.

## Description

In most IC architectures, peripherals connected to the local bus architecture need a clock to operate. Usually, most peripherals on a bus architecture need the same clock frequency for the system to operate. The clock required for a peripheral will then also be the clock for all the other peripherals on the bus. These peripherals may need a permanent running clock to be able to operate correctly. In an IC, clocks mean power. The higher the frequency, the more power is consumed.

It is, inter alia, an object of the invention to provide an improved IC architecture. To this end, the invention provides an IC as defined in the independent claim. The dependent claims define advantageous embodiments.

In an exemplary embodiment, to reduce power in System On Chips, clocks of busses and peripherals inside the System On Chip are automatically scaled depending on bus-control information. If a bus master needs to send or receive data, the bus and/or the peripherals will run at 'high' speed, if not, at 'low' speed.

These and other aspects of the invention will be apparent from and elucidated with reference to the embodiments described hereinafter.

In the drawings:
Fig. 1 shows a prior art IC architecture; and
Fig. 2 shows an embodiment of an IC architecture in accordance with the present invention.

This document describes a solution for reducing power in an Integrated Circuit (IC). This IC may include:

One or more Central Processor Unit(s) (CPU). This could be RISC, CISC, or VLIW based CPUs, Digital Signal Processors or a mixture of these processors. Such a CPU is an initiator or bus-master of data and command transport in the SOC.

One or more busses that allow communication to peripherals in the system (bus).

Peripherals that connect to the peripheral-bus and responds to addresses and commands generated by (any of) the CPU in the system, or optionally other bus-masters like a DMA controller. This peripheral may or may not return data or responses back towards the bus-master.

One or more clocks for the CPU(s), bus(ses) and peripheral(s).

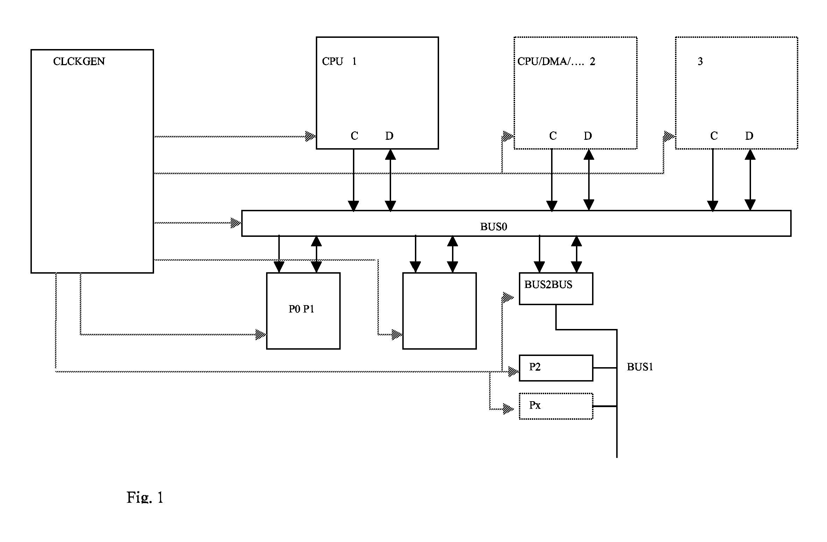

In a typical IC architecture as shown in Fig. 1, many peripherals are connected to the bus architecture and receive clocks to be able to operate properly. In most cases the clocks of the peripherals are running synchronous with the bus clock and will be based on the same clock-source. If this clock-source changes in frequency, then in this case, so will the frequency of the peripherals. Exceptions are allowed where each individual block receives its own unique clock.

In Fig. 1, clock generation hardware CLCKGEN provides clock signals to one or more CPUs 1, 2 and maybe more masters 3, a bus BUS0, peripherals P0, P1, P2, Px, and a bus-to-bus circuit BUS2BUS that, like the peripherals P2 and Px, is connected to a second bus BUS1. Control lines C and data exchange lines D are present between the devices 1, 2, 3, P0, P1, BUS2BUS on the one hand, and the bus BUS0 on the other hand.

In an advantageous embodiment, this invention will make sure that the bus and its peripherals will only receive the minimal clock required to operate when these blocks are not accessed. If these blocks however do need to be accessed by any of the bus-masters (like CPU, DMA, DSPs, etc.) then the clock is automatically increased to get the highest transfer rates possible. This results in the following benefits:
Reduction in power consumption on the bus(ses) that can be scaled in frequency.
Far less clocks (therefore power) will be required for the peripherals that are connected to the bus to do the same job.
Reduction in power consumption on the peripherals that can be scaled in frequency.
The optimum speed setting of the bus will be automatically determined by the clock-generation hardware. No need for the programmer to program the 'optimal' average clock speed setting.
Reduction in power in the clock-tree from the clock generation hardware towards the busses and peripherals.

The prior art understanding was that each peripheral on a bus architecture needs to run at one frequency: the frequency that is controlled by software to run at the most power and performance efficient setting.

In an advantageous embodiment of this invention, the approach is different: the peripherals may run at a certain minimum frequency and only require a fast clock if instruction/data-access is required. This allows the bus and its peripherals to be scaled at low and high frequencies by hardware control, saving clock cycles when no bus-access is required. Power consumption in an IC can be improved by automatically switching clocks based on bus-control information of one or more of the bus-masters. Basically:
If a bus-master or peripheral needs to transport data, or predicts it need to transport data the clock(s) of the bus and/or peripherals are running at the high speed.
If a bus-master does not need to transfer data (anymore), the clock(s) of the bus and/or peripherals are running at a low speed.

This way the peripheral(s) connected to the bus only receive high clocks when they need to 'perform' and will consume less power at moments it is not required to perform. The system that embeds this solution allows certain clocks to be automatically scaled to run at two (or more) different frequencies. These frequencies may be programmable, or may be fixed in hardware. The hardware controlling the clock switching will depend on system feedback so as to determine which clock to choose or generate. This feedback may depend on the bus-control information, but it also allows for other sources of the system to control this speed-selection. If a peripheral has a certain clock requirement to meet its own timing requirements, it can signal the clock switching to run temporarily at the high-speed setting, until the timing requirements have been met. A good example here is an SDRAM controller that needs to send refreshes towards a SDRAM in fixed timing periods, requiring a certain amount of clocks. The slow-speed setting may be too slow to meet this requirement, so a temporary faster running clock will solve this requirement.

If a peripheral has a certain power consumption based on time instead of clock-speed, then allowing to temporarily increase the clock to the high-speed setting will decrease the time-period, saving power on that peripheral. A good example here is an SDRAM that consumes power depending on the time spent on individual accesses and refreshes. This solution would allow decreasing the time-period for these accesses by temporary increasing the frequency, therefore reducing power in the SDRAM.

The selection of which master or peripheral controls the high/low speed selection can either be done hard-wired or be programmable by the CPU.

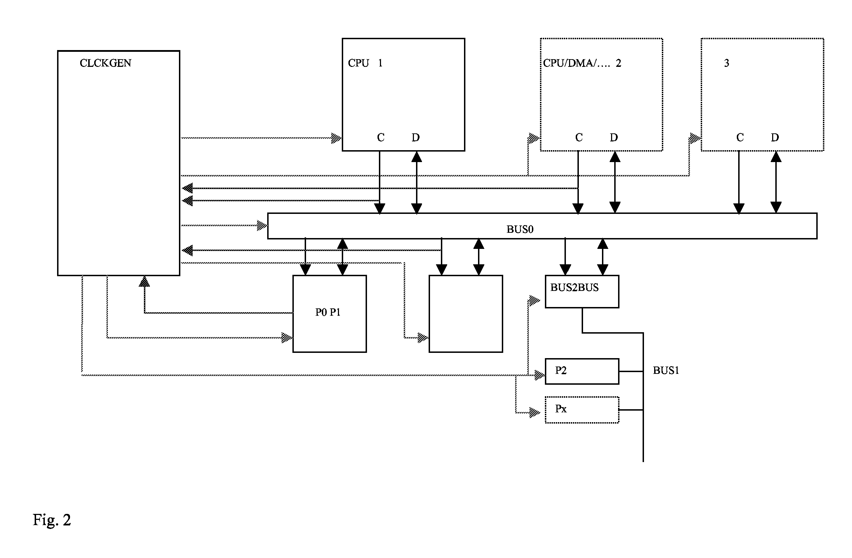

Fig. 2 shows an embodiment of an IC architecture in accordance with the present invention. Fig. 2 differs from prior art Fig. 1 in that the clock generation hardware CLCKGEN receives several low-speed or high-speed requests from various components in the IC architecture.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. The mere fact that certain measures are recited in mutually different dependent claims does not indicate that a combination of these measures cannot be used to advantage.

## Claims

1. An integrated circuit, comprising:
a clock generator (CLCKGEN); and
a device (1, P0) coupled to receive a clock signal from the clock generator, wherein the device is coupled to provide a control signal to the clock generator to inform the clock generator as to a clock speed desired by the device.

2. An integrated circuit as claimed in claim 1, wherein a first clock speed desired by the device when the device wishes to send and/or receive data exceeds a second clock speed by the device when the device does not wish to send and/or receive data.

3. An integrated circuit as claimed in claim 1, wherein the clock speed desired by the device depends on timing requirements to be met by the device.

4. An integrated circuit as claimed in claim 3, wherein the timing requirements depend on an amount of power consumed by the device while the device performs a task.
